# EUROPEAN PATENT SPECIFICATION

(11) **EP 0 562 678 B1**
(45) Date of publication and mention of the grant of the patent: **06.12.1995**
(21) Application number: 93200798.2
(22) Date of filing: 18.03.1993
(51) Int. Cl.: A01K 1/06, F16B 17/00

(54) **Stroke damping and method for making said damping**
Vorrichtung und Verfahren zur Endlagendämpfung
Butée de fin de course et procédé de sa production

(30) Priority: 26.03.1992 NL 9200561
(43) Date of publication of application: 29.09.1993
(73) Proprietor: DE BOER STALINRICHTINGEN B.V., NL-8938 AD Leeuwarden (NL)
(72) Inventor: Vrieswijk, Andries, NL-9067 CM St. Annaparochie (NL)
(74) Representative: 't Jong, Bastiaan Jacobus

(56) References cited:
- EP-A- 0 124 902
- DE-A- 3 439 451
- FR-A- 2 624 928
- GB-A- 2 076 925
- SPINDER BV 'SPINDER STALINRICHTING: LEVERINGSPROGRAMMA 1990/1991' 1 May 1990 , SPINDER BV , HARKEMA (NL)

## Description

The invention relates to a device with a movable tubular member which can be moved into an end position against a stop. Such a device is for instance a feeding fence for cattle, known from the brochure "Spinder Stalinrichting, Leveringsprogramma 1990/1991", wherein the tubular member is a pivoting catching bar.

When a tubular member moves against a stop at a certain speed quite a loud, irritating noise occurs. It is therefore known to arrange at the position of the stop a rubber cap or the like which damps the noise. Existing solutions have the drawback that they come loose after a period of time.

The invention now has for its object to provide such a device with a stop damping which can function reliably and for a long period of time.

According to the invention this is achieved with the device characterized in claim 1. When the adjoining material of the tube wall is deformed the elongate element of flexible material is elastically deformed at the same time, whereby after the deforming operation the passage defined by the bore is narrowed and the elongate element is fixed unreleasably in the tubular member. The protruding portion herein forms the part of the stop which provides the damping of the impact.

The invention is particularly suitable for use as a self-catching feeding fence, wherein the tubular member provided with the element of flexible material is a pivoting catching bar. Under the heavy loads to which such feeding fences are exposed the stop damping continues to act reliably during the whole useful life of the feeding fence.

A favourable embodiment is herein characterized in claim 3. In such a feeding fence, wherein the top end of the swivel bar has already been flattened anyway in order that it can fit into the channel of the upper profile, only the additional operations of arranging the bore and inserting the elongate element thus have to be carried out.

The invention also relates to and provides a method for manufacturing a tubular member provided with a stroke damping. This method is characterized in claim 4. The deforming can be effected here in suitable manner with a pressing operation.

A very favourable embodiment is characterized in claim 5. Due to a surface treatment such as thermal galvanizing considerable dimensional tolerances occur irreversibly in the bores present. With the method according to the invention an elongate element of flexible material can still be arranged firmly in the tubular member in a reliable manner even with these considerable dimensional tolerances. It is thus not necessary to only arrange the bore after the galvanizing treatment has been carried out. This latter would of course result in a reduction of the corrosion resistance.

A further development is characterized in claim 6. By causing the elongate element to protrude on both sides not only is a very robust fixing of this element achieved but a stop is also obtained which acts on two sides.

In preference the elongate element is cut from a length of rubber-like profile material. The cost hereof is very low so that the advantages of the invention can be gained at very low cost.

The invention will be further elucidated in the following description with reference to the annexed figures.

Figure 1 shows in perspective view a device according to the invention embodied as a self-catching feeding fence.

Figure 2 shows a view corresponding with figure 1 of another embodiment.

Figure 3 shows a detail along arrow III in figure 1.

Figure 4 shows a detail along arrow IV in figure 2.

Figure 5 is a view corresponding with figures 3 and 4 of an alternative embodiment.

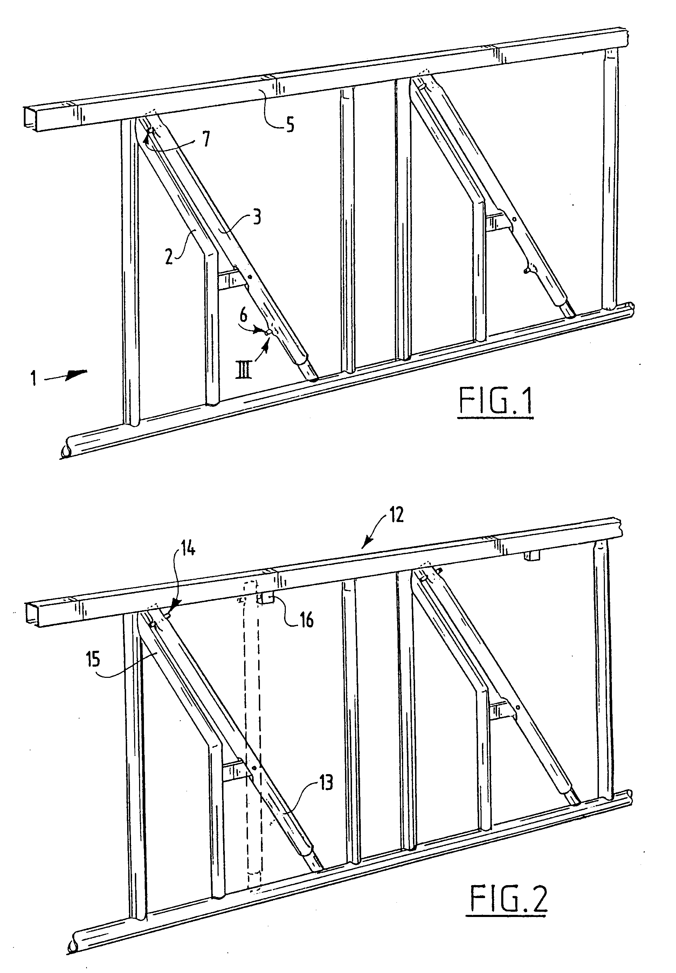

Shown in figure 1 is a feeding fence 1 embodied as a device according to the invention. This feeding fence 1 comprises in known manner a number of feeding locations in which a catching bar 3 is pivotally mounted to a fixed bar 2 at the position of a hinge 4. The catching bar 3 can stand in the shown open position and in an upright closed position. In the upright closed position the catching bar can be held fixedly by locking means (not further shown).

At its top end the catching bar 3 is received in an elongate channel-like opening in the underside of the upper profile 5.

In the shown open position the bar 3 lies with a stop 7 against the fixed bar 2. In the upright closed position the catching bar 3 lies with a stop 6 against the fixed bar 2.

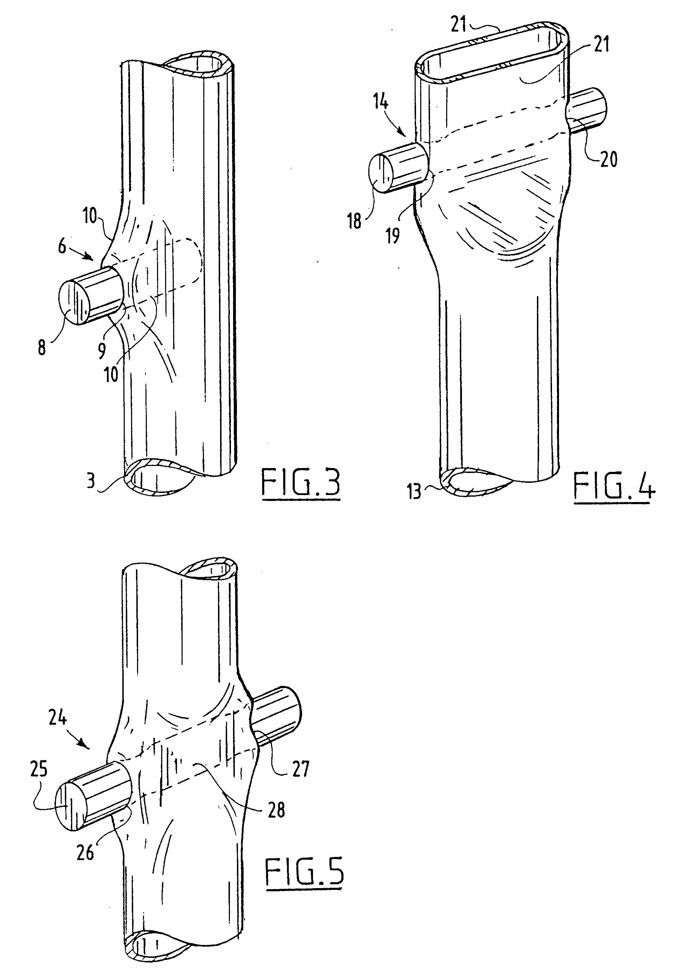

As shown in more detail in figure 3, a bore 9 is arranged in the tubular catching bar 3 at the position of this stop 6, in which bore is inserted an elongate element 8. This latter is of flexible material, such as for instance rubber-like material. In suitable manner the elongate element 8 is a piece cut from a length of rubber-like profile material. This profile material is commercially available for various applications.

After the elongate element 8 has been inserted into the opening 9 the portion of the wall of tube 3 adjoining this opening 9 is deformed, in particular the opposite wall portions 10 are pinched together. This operation can take place in a manner that is further self-evident, for instance with a press. Due to this deforming the wall portions 10 are pressed into the passage defined by the bore 9, wherein the elongate element 8 is deformed elastically. This deforming results in a great reaction force, and thereby a great friction force, such that the elongate element is received unreleasably in the tubular member 3.

The feeding fence 12 shown in figure 2 likewise has a catching bar 13 pivotally arranged on a fixed bar 15. This catching bar 13 is provided on its top end with a double-sided stop 14 which is shown in more detail in figure 4.

Arranged in tube 13 are two oppositely located bores 19 and 20 in which is received an elongate element 18 of flexible material. The end of tube 13 is then flattened so that the wall portions 21 thereof are moved toward each other, wherein the elongate element 18 is clamped fixedly in the above described manner.

The flattened top end of catching bar 13 is received in the feeding fence 12 in guided manner in an elongate channel in the underside of the upper profile. Such a construction is per se known.

In the case of the feeding fence 12 the catching bar 13, after the bores 19 and 20 are arranged therein, is first galvanized in the usual manner. Protection of the basic material is hereby also ensured at the position of the bores 19 and 20. After galvanizing the elongate element 18 is arranged and the tube end is flattened in the already known manner. The protection obtained by the galvanizing herein remains intact.

As shown clearly in figure 4, the elongate element 18 protrudes on either side and thus forms a stroke damping on both sides. As can be seen in figure 2, the one side coacts with the fixed bar 15 and the other side with a projection 16 arranged on the upper profile of the fence 12.

The diameter of the bores 19 and 20 can be made so large that, even with the maximum diameter decrease that can be expected as a result of galvanizing, the elongate element 18 can still be pushed through the bores without problem. The diameter of these bores is not critical for a good fixing of the elongate element 18.

Figure 5 shows another alternative embodiment. The stop 24 shown therein is arranged in a tubular member at an intermediate position. Here also two oppositely located bores 26 and 27 are arranged through which the elongate element 25 of flexible material is pushed. Thereafter the wall portions 28 of the tube adjoining bores 26 and 27 are flattened, whereby the elongate element 25 is fixed unreleasably in the tube.

Although the invention is elucidated on the basis of an embodiment as feeding fence for cattle, countless other applications are possible. Nor is the invention limited to use with tubes with the round diameter shown. Square or otherwise formed tubes can also be used in the invention. The shape of the elongate element is of course also not limited to that shown. It is favourable from a cost viewpoint to make use of elongate elements cut from a length of rubber-like profile material. However, specially formed elongate elements having for instance a wider head could also be applied. Since, as noted above, the diameter of the bores into which the elongate element is inserted is not critical, elongate elements having a cross section other than a circular one can also be used. All these embodiments that are not shown are deemed as falling within the scope of the annexed claims.

## Claims

1. Device comprising a frame with a movable member (3) and a fixed member (2), said movable member (3) being movable on the frame with respect to the fixed member (2), wherein a stop (7) therebetween defines an end position of the movable member (3) with respect to and against the fixed member (2), and at least one of these members is a tubular member (3) comprising an element (8) of flexible material co-acting with the stop (7), said tubular member (3) having at least one tube wall (10) and being provided in the portion co-acting with the stop (7) with a bore (9) facing toward the other member in a tube wall (10), said element (8) of flexible material being an elongate element (8) and being received in said bore (9) and the portion of the tubular member (3) co-acting with the stop (7) being deformed such that the elongate element (8) is clamped fixedly between the tube wall portions adjoining the bore (9).

2. Device as claimed in claim 1, being a self-catching feeding fence (1), wherein the tubular member (3) provided with the elongate element (8) of flexible material is a pivoting catching bar (3).

3. Device as claimed in claim 2, wherein the pivoting catching bar (13) is provided with a flattened top end which is enclosed at the sides in a longitudinal channel of an upper profile of the feeding fence (1), and the elongate element (18) of flexible material is received in the flattened end.

4. Method of providing a tubular member (3) having at least one tube wall (10) with stroke damping, suitable to be used in the device of claim 1, by arranging at least one bore (9) in a wall of the tubular member (3), placing an elongate element (8) of flexible material in the bore (9) such that a portion thereof protrudes therefrom and deforming in a direction towards each other wall portions (19) of the tubular member (3) co-acting with the stop (7) located adjacently of the bore (9) such that the elongate element (8) is clamped fixedly between said tube wall portions (19) adjoining the bore (9).

5. Method as claimed in claim 4, wherein the tubular member (3) is galvanized after arranging of the bore (9) and prior to deforming.

6. Method as claimed in claim 4 or 5, wherein a continuous bore (19, 20) is arranged through opposite wall portions of the tubular member (13) and the elongate element (18) is pushed through both bores (19, 20) protruding on both sides.

7. Method as claimed in any of the claims 4-6, wherein the elongate element (18) is cut from a length of rubber-like profile material.

## Patentansprüche

1. Vorrichtung mit einem Rahmen mit einem beweglichen Körper (3) und einem festen Körper (2), wobei der bewegliche Körper (3) am Rahmen gegenüber dem festen Körper (2) beweglich ist und ein Anschlag (7) dazwischen eine Endlage des beweglichen Körpers (3) gegenüber dem festen Körper (2) definiert und wenigstens einer dieser Körper aus einem Rohrkörper (3) mit einem Element (8) aus flexiblem Material besteht, welches mit dem Anschlag (7) zusammenwirkt, wobei der Rohrkörper (3) wenigstens eine Rohrwand (10) besitzt und in dem mit dem Anschlag (7) zusammenwirkenden Abschnitt mit einer Bohrung (9) ausgestattet ist, die nach dem anderen Körper in der Rohrwand (10) weist, wobei das Element (8) aus flexiblem Material ein langgestreckter Körper (8) ist, der von der Bohrung (9) aufgenommen wird und der Abschnitt des Rohrkörpers (3), der mit dem Anschlag (7) zusammenwirkt, derart deformiert ist, daß das langgestreckte Element (8) fest zwischen den Rohrwandabschnitten, die der Bohrung (9) benachbart sind, eingeklemmt wird.

2. Vorrichtung nach Anspruch 1, welche als Selbstfang-Futterzaun (1) ausgebildet ist, wobei der Rohrkörper (3), der mit dem langgestreckten Element (8) aus flexiblem Material ausgestattet ist, eine schwenkbare Fangstange (3) ist.

3. Vorrichtung nach Anspruch 2, bei welcher die schwenkbare Fangstange (13) mit einem abgeflachten oberen Ende versehen ist, das seitlich in einen Längskanal eines U-förmigen oberen Profils des Futterzauns (1) eingreift und das langgestreckte Element (18) aus flexiblem Material in dem abgeflachten Ende eingesetzt ist.

4. Verfahren zur Schaffung eines rohrförmigen Körpers (3), der wenigstens eine Rohrwand (10) mit Stoßdämpfung aufweist, geeignet zur Benutzung in der Vorrichtung gemäß Anspruch 1, in dem wenigstens eine Bohrung (9) in einer Wand des Rohrkörpers (3) angebracht wird, in dem ein langgestrecktes Element (8) aus flexiblem Material in die Bohrung (9) derart eingesetzt wird, daß ein Teil hiervon vorsteht und die Wandabschnitte (19) des rohrförmigen Körpers (3) in Richtung aufeinander zu deformiert werden, wobei das langgestreckte Element mit dem Anschlag (7) zusammenwirkt, der benachbart zu der Bohrung (9) zu liegen kommt, derart, daß das langgestreckte Element (8) fest zwischen den Rohrwandabschnitten (19) benachbart zur Bohrung (9) eingeklemmt wird.

5. Verfahren nach Anspruch 4, bei welchem der Rohrkörper (3) erst nach Einbringen der Bohrung (9) und vor der Deformation galvanisiert wird.

6. Verfahren nach den Ansprüchen 4 oder 5, bei welchem eine durchgehende Bohrung (19, 20) durch gegenüberliegende Wandabschnitte des Rohrkörpers (13) geführt ist und das langgestreckte Element (18) durch beide Bohrungen (19, 20) geschoben wird, derart, daß das langgestreckte Element auf beiden Seiten vorsteht.

7. Verfahren nach einem der Ansprüche 4 bis 6, bei welchem das langgestreckte Element (18) von einer Länge gummiartigen Profilmaterials abgeschnitten wird.

## Revendications

1. Dispositif comprenant un cadre avec un organe mobile (3) et un organe fixe (2), ledit organe mobile (3) étant mobile sur le cadre par rapport à l'organe fixe (2), dans lequel une butée (7) entre eux définit une position extrême de l'organe mobile (3) par rapport à, et contre, l'organe fixe (2), et au moins l'un de ces organes est un organe tubulaire (3) comprenant un élément (8) en matière flexible coopérant avec la butée (7), ledit organe tubulaire (3) possédant au moins une paroi tubulaire (10) et étant muni dans la partie de coopération avec la butée (7) d'un perçage (9) tourné vers l'autre organe dans une paroi tubulaire (10), ledit élément (8) en matière flexible étant un élément allongé (8) et étant logé dans ledit perçage (9) et la partie de l'organe tubulaire (3) coopérant avec la butée (7) étant déformée en sorte que l'élément allongé (8) soit serré fixement entre les parties de paroi tubulaire contiguës au perçage (9).

2. Dispositif selon la revendication 1, sous la forme d'une barrière d'alimentation (1) à saisie automatique, dans lequel l'organe tubulaire (3) muni de l'élément allongé (8) en matière flexible est une barre de saisie pivotante (3).

3. Dispositif selon la revendication 2, dans lequel la barre de saisie pivotante (13) est munie d'une extrémité supérieure aplatie qui est enserrée sur les côtés dans un canal longitudinal d'un profil supérieur de la barrière d'alimentation (1), et l'élément allongé (18) en matière flexible est logé dans l'extrémité aplatie.

4. Procédé pour munir un organe tubulaire (3), possédant au moins une paroi tubulaire (10), d'une limitation de course avec amortissement convenant à une utilisation dans le dispositif selon la revendication 1, en ménageant au moins un perçage (9) dans une paroi de l'organe tubulaire (3), en mettant en place un élément allongé (8) en matière flexible dans le perçage (9), de sorte qu'une partie de celui-ci en dépasse, et en déformant, en direction l'une de l'autre, les parties de paroi (19) de l'organe tubulaire (3) coopérant avec la butée (7) placée contiguë au perçage (9), de sorte que l'élément allongé (8) est serré fixement entre lesdites parties de paroi de tube (19) contiguës au perçage (9).

5. Procédé selon la revendication 4, dans lequel l'organe tubulaire (3) est galvanisé après avoir ménagé le perçage (9) et avant déformation.

6. Procédé selon la revendication 4 ou 5, dans lequel un perçage continu (19, 20) est ménagé à travers les parties de paroi opposées de l'organe tubulaire (13), et l'élément allongé (18) est enfoncé à travers lesdits perçages (19, 20) en dépassant des deux côtés.

7. Procédé selon l'une quelconque des revendications 4 à 6, dans lequel l'élément allongé (18) est obtenu par tronçonnage à partir d'une longueur de matériau profilé de type caoutchouc.
